# FASCICULE DE BREVET EUROPEEN

(11) **EP 1 810 894 B1**
(45) Date de publication et mention de la délivrance du brevet: **21.05.2008**
(21) Numéro de dépôt: 07100450.1
(22) Date de dépôt: 12.01.2007
(51) Int. Cl.: B60R 21/34

(54) **Dispositif de protection des piétons en cas de choc frontal avec un véhicule automobile et véhicule automobile équipé d'un tel dispositif de protection des piétons**
Aufprallschutzsystem für Fussgänger und damit ausgestattetes Fahrzeug
Protection device for pedestrians in case of impact with a vehicle and a vehicle equipped with such a device

(30) Priorité: 19.01.2006 FR 0600503
(43) Date de publication de la demande: 25.07.2007
(73) Titulaire: Peugeot Citroën Automobiles, 78140 Velizy Villacoublay (FR)
(72) Inventeur: Groeninck, François, 95170 Deuil La Barre (FR); Mancho, Séverine, 78560 Le Port Marly (FR); Bienvenu, Thierry, 93700 Drancy (FR)

(56) Documents cités:
- EP-A- 1 568 551
- WO-A-20/04103780
- DE-A1- 10 033 186
- DE-A1- 10 043 931
- DE-A1- 10 319 366

## Description

La présente invention concerne un dispositif de protection des piétons en cas de choc frontal avec un véhicule automobile, ainsi qu'un véhicule automobile équipé d'un tel dispositif de protection.

Généralement, les véhicules automobiles comportent un capot articulé dans sa partie arrière sur la structure du véhicule, de façon que son ouverture s'effectue par l'avant, ce capot étant relié dans sa partie arrière à la structure du véhicule par des moyens de liaison permettant à ce capot de pivoter.

Dans certains véhicules automobiles, les moyens de liaison du capot avec la structure du véhicule sont associés à des moyens de déplacement vers le haut de la partie arrière du capot aptes à être activés lorsqu'un choc piéton est détecté dans la partie frontale du véhicule.

Ces moyens de déplacement permettent d'éloigner la zone d'impact entre la tête du piéton et le capot, des éléments rigides situés sous le capot, afin de diminuer la gravité des chocs du piéton sur ce capot, notamment au niveau de la tête. Ce type de capot pourvu de tels moyens d'élévation est couramment désigné par "capot actif".

En effet, en cas de choc frontal d'un véhicule automobile avec un piéton, la tête du piéton vient en général heurter violemment le capot. Lors de l'impact de la tête du piéton sur le capot, il se produit un enfoncement du capot jusqu'à un impact éventuel avec des éléments rigides situés sous le capot, tels que la batterie, des éléments porteurs... De même, il peut se produire un impact direct avec des zones rigides du capot. Ces impacts contre des éléments rigides constituent la cause principale des décès ou des blessures graves des piétons renversés.

On connaît des dispositifs de protection des piétons comprenant des moyens de déplacement vers le haut de la partie arrière du capot, cette élévation s'accompagnant d'une rotation du capot autour de la serrure du mécanisme d'ouverture du capot, située en partie avant de ce capot, tandis que l'articulation ou charnière située en partie arrière est généralement directement supportée par les moyens de déplacement. De cette façon, l'activation des moyens de déplacement imprime à la charnière un mouvement vers le haut qui entraîne dans sa course le capot.

Jusqu'à présent, les moyens de déplacement de la partie arrière du capot utilisés, ne sont pas réversibles ce qui oblige l'utilisateur à un dépannage pour remettre le capot en position, qu'il y ait eu une collision avec un piéton, même si le capot n'est pas endommagé ou que les moyens de déplacement se soient déclenchés de manière intempestive du fait que le système de détection n'a pas su distinguer un objet, comme par exemple un plot ou un ballon d'un piéton.

On connaît des systèmes dits réversibles qui permettent au client de remettre le capot en position après un déclenchement intempestif. Mais, ces systèmes nécessitent une manipulation difficile et peuvent requérir plus d'une personne pour réenclencher chaque charnière simultanément.

De plus, après un déclenchement, une intervention doit être réalisée sur le système de déclenchement pour que celui-ci soit de nouveau fonctionnel qu'il y ait eu collision avec un piéton ou non, ce qui engendre une immobilisation plus longue du véhicule et des coûts de réparation supplémentaires.

Un dispositif tel que décrit dans le préambule de la revendication 1 est présenté dans le DE-A-10319366.

L'invention a pour but de proposer un dispositif de protection des piétons en cas de choc frontal avec un véhicule automobile qui permet de pallier aux inconvénients précédemment mentionnés et qui peut être remis en état de fonctionnement de façon aisée, évitant ainsi une immobilisation du véhicule et un surcoût de réparation pour rétablir la fonction active du capot.

L'invention a donc pour objet un dispositif de protection des piétons en cas de choc frontal avec un véhicule automobile comprenant des moyens de déplacement de la partie arrière du capot entre une position de fermeture et une position surélevée et aptes à être activés lors de la détection d'un choc piéton dans la partie frontale du véhicule, lesdits moyens de déplacement étant conformés pour être réarmés manuellement suite à leur activation pour être de nouveau opérationnels, caractérisé en ce que les moyens de déplacement de la partie arrière du capot comprennent au moins un ensemble formé par:
- un charnon fixe solidaire de la caisse du véhicule,
- un charnon mobile solidaire du capot,
- un charnon mobile intermédiaire comportant, à l'une de ses extrémités, un premier axe d'articulation sur le charnon mobile, et à l'autre de ses extrémités, un second axe d'articulation sur le charnon fixe, ledit second axe d'articulation étant situé derrière le premier axe par rapport à l'avant du capot,
- des moyens de verrouillage et de déverrouillage de la rotation du premier axe entre le charnon mobile et le charnon mobile intermédiaire dans les positions respectivement de fermeture et surélevée du capot, et
- un moyen de transmission d'une poussée sur le charnon mobile lors du déverrouillage du premier axe dans la position de fermeture du capot.

Selon d'autres caractéristiques de l'invention :
- le charnon mobile intermédiaire a la forme d'un col de cygne dont la partie recourbée est dirigée vers le haut,
- les moyens de verrouillage et de déverrouillage de la rotation du premier axe d'articulation comprennent un système à cames commandé par un effet électromagnétique lui même déclenché par un moyen de traitement en fonction du signal transmis par un système de détection,
- le moyen de transmission d'une poussée sur le charnon mobile est formé par un ressort de compression dont une première extrémité est fixée sur le charnon mobile intermédiaire et dont une seconde extrémité est fixée sur un levier relié au charnon mobile par l'intermédiaire du premier axe d'articulation, et
- les moyens de verrouillage et de déverrouillage, le ressort de compression et le levier forment un ensemble destiné à être monté sur le premier axe d'articulation.

L'invention a également pour objet un véhicule automobile, caractérisé en ce qu'il comprend un dispositif de protection des piétons tel que précédemment mentionné.

D'autres caractéristiques et avantages de l'invention apparaîtront au cours de la description qui va suivre, donnée à titre d'exemple et faite en référence aux dessins annexés, sur lesquels :
- la Fig. 1 est une vue schématique de la partie avant d'un véhicule automobile montrant la localisation des moyens de déplacement du capot appartenant au dispositif de protection des piétons, conforme à l'invention,
- la Fig. 2 est une vue schématique de côté des moyens de déplacement de la partie arrière du capot,
- la Fig. 3 est une vue schématique en perspective du charnon fixe et du charnon mobile d'une charnière du capot,
- la Fig. 4 est une vue schématique en perspective éclatée du charnon mobile et du charnon fixe de la charnière et des moyens de déplacement de la partie arrière du capot,
- les Figs. 5A et 5B sont des schémas montrant le déplacement de la partie arrière du capot lors de l'activation des moyens de déplacement à la suite d'un choc avec un piéton,
- les Figs. 6A à 6D sont des schémas montrant la remise en position de la partie arrière du capot après l'activation des moyens de déplacement, et
- les Figs. 7A et 7B sont des schémas montrant l'ouverture de la partie arrière du capot par un utilisateur et par un garagiste.

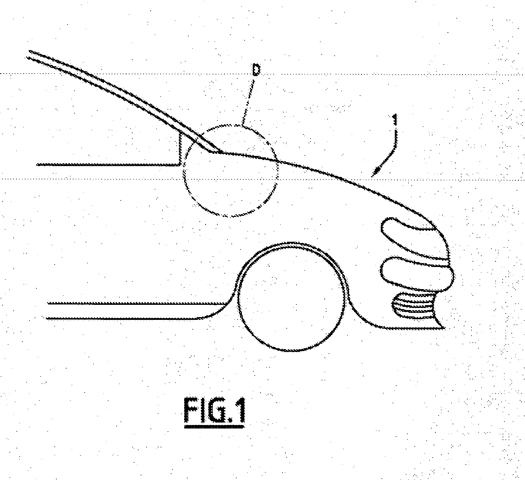

Sur la Fig. 1, on a représenté un véhicule automobile pourvu d'un capot équipé d'un dispositif de protection des piétons en cas de choc frontal.

Le dispositif de protection des piétons comprend des moyens de déplacement vers le haut de la partie arrière du capot 1, aptes à être activés lorsqu'un choc piéton est détecté dans la partie frontale du véhicule. Ces moyens de déplacement sont situés dans la zone D.

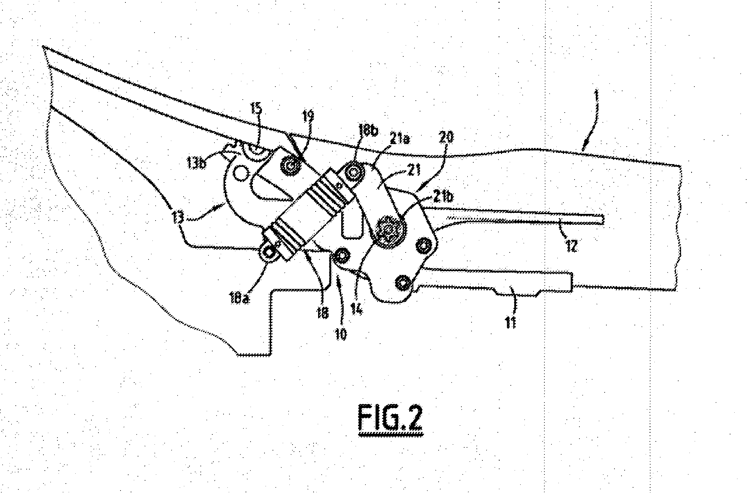

Les moyens de déplacement représentés de manière détaillée sur les Figs. 2 à 4 sont désignés par la référence générale 10.

Par souci de clarté dans la description, à chaque fois qu'il sera fait référence aux moyens de déplacement 10 et à ses éléments constitutifs, il faudra bien entendu comprendre que ces moyens de déplacement comprennent deux ensembles disposés chacun sur un côté du capot 1.

Les moyens de détection de l'impact sur la partie frontale du véhicule ainsi que les moyens de traitement et de commande pilotant les moyens de déplacement 10 de la partie arrière du capot 1 sont classiques et parfaitement connus de l'homme de l'art.

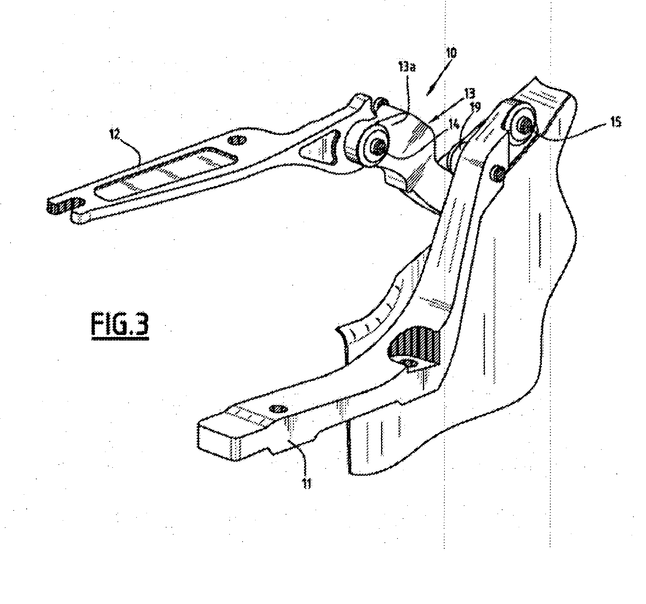

Ainsi que montré sur les Figs. 2 à 4, les moyens 10 de déplacement de la partie arrière du capot 1 entre une position de fermeture représentée à la Fig. 2 et une position surélevée représentée à la Fig. 3, sont conformés pour être réarmés manuellement suite à leur activation de façon à être de nouveau opérationnels.

Ces moyens 10 de déplacement comprennent un charnon fixe 11 solidaire de la caisse du véhicule par des moyens appropriés de type classique et un charnon mobile 12 solidaire du capot 1 également par des moyens appropriés de type connu. Les charnons, respectivement fixe 11 et mobile 12, sont reliés entre eux par un charnon mobile intermédiaire 13 comportant, à l'une 13a de ses extrémités, un premier axe d'articulation 14 sur le charnon mobile 12 et, à l'autre 13b de ses extrémités, un second axe d'articulation 15 sur le charnon fixe 11. Le charnon mobile intermédiaire 13 présente une forme déterminée pour que le second axe d'articulation 15 soit situé derrière le premier axe d'articulation 14 par rapport à l'avant du capot 1. En effet, le charnon mobile intermédiaire 13 a la forme d'un col de cygne dont la partie recourbée 13b est dirigée vers le haut et à l'extrémité de laquelle est disposé le second axe d'articulation 15.

Le dispositif comprend également des moyens de verrouillage et de déverrouillage de la rotation du premier axe d'articulation 14 dans les positions respectivement de fermeture et surélevée du capot 1. Ces moyens de verrouillage et de déverrouillage désignés par la référence générale 20 comprennent un système à cames commandé par un effet électromagnétique.

Enfin, le dispositif de protection comporte aussi un moyen de transmission d'une poussée sur la charnon mobile 12 et qui est constitué par un ressort de compression 18 dont une première extrémité 18a est fixée sur le charnon mobile intermédiaire 13 et dont une seconde extrémité 18b est fixée sur une première extrémité 21 a d'un levier 21 relié, par sa seconde extrémité 21 b, au charnon mobile 12 par l'intermédiaire du premier axe d'articulation 14.

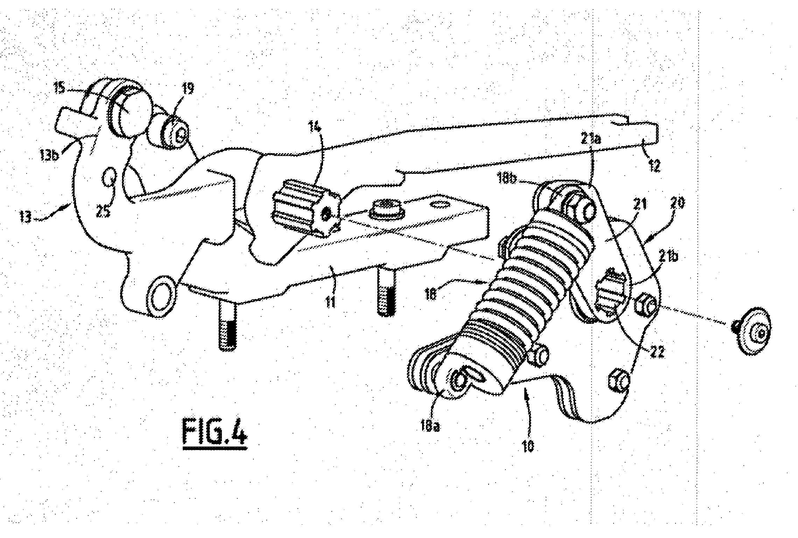

A cet effet, et comme montré à la Fig. 4, l'axe d'articulation 14 comporte une partie cannelée qui est destinée à pénétrer dans un orifice 22 ménagé à l'extrémité 21 b du levier 21 et qui comporte également des cannelures afin de solidariser en rotation ce levier 21 audit premier axe d'articulation 14.

Comme cela apparaît à la Fig. 4, les moyens 20 de verrouillage et de déverrouillage, le ressort de compression 18 et le levier 21 forment un ensemble indépendant qui peut être facilement enlevé et monté sur le premier axe d'articulation 14. Ainsi, lors du passage de la charnière en cataphorèse, cet ensemble comprenant les moyens 20 de verrouillage et de déverrouillage, le ressort de compression 18 et le levier 21, peut être enlevé de cette charnière et remplacé par une pièce temporaire qui peut passer en cataphorèse.

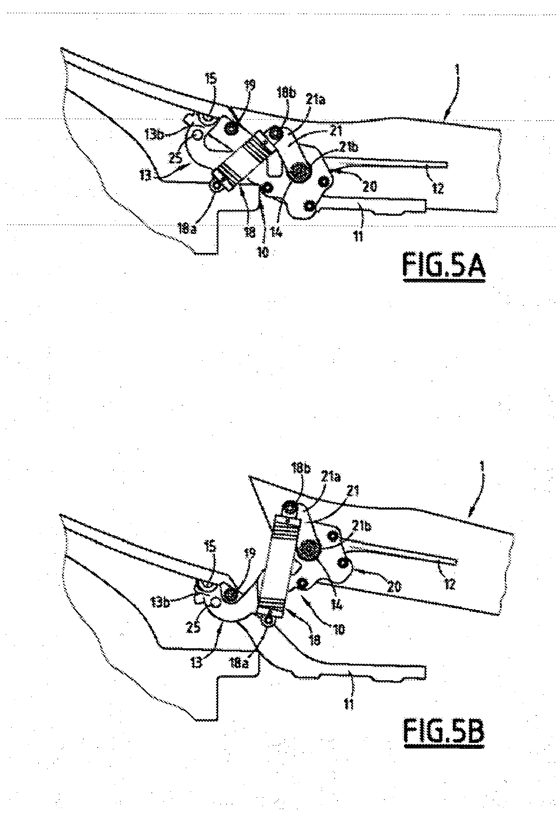

En utilisation normale, le capot 1 ainsi que les différents éléments du dispositif de protection des piétons se trouvent dans la position représentée à la Fig. 5A, le ressort 18 étant comprimé.

Dès qu'un système de détection de type connu, non représenté, identifie un impact sur le véhicule automobile susceptible d'être un choc avec un piéton, un signal est transmis à un boîtier de commande des moyens 20 de verrouillage et de déverrouillage de la rotation du premier axe 14 qui libère la rotation de ce premier axe 14 entre le charnon mobile 12 et le charnon mobile intermédiaire 13. Le ressort de compression 18 exerce donc une poussée vers le haut sur le charnon mobile 12 et le charnon mobile intermédiaire 13 tourne librement autour du second axe d'articulation 15. Le ressort de compression 18 se détend jusqu'au blocage programmé du premier axe d'articulation 14 par les moyens 20 de verrouillage de cet axe 14. Le capot 1 est alors en position haute comme montrée à la Fig. 5B, si bien que si un choc a lieu avec le piéton, il sera moins sévère pour celui-ci.

Avantageusement, les moyens de déplacement de la partie arrière du capot 1 selon l'invention, sont conformés pour être réarmés manuellement suite à leur activation, de façon à être de nouveau opérationnels. C'est à dire qu'après l'activation, si le capot n'est pas endommagé dans le cas où il n'y a pas eu de contact ou bien si il s'agit d'un déclenchement intempestif, les moyens de déplacement peuvent être remis dans leur état initial sans changement de pièces et par une intervention manuelle relativement simple.

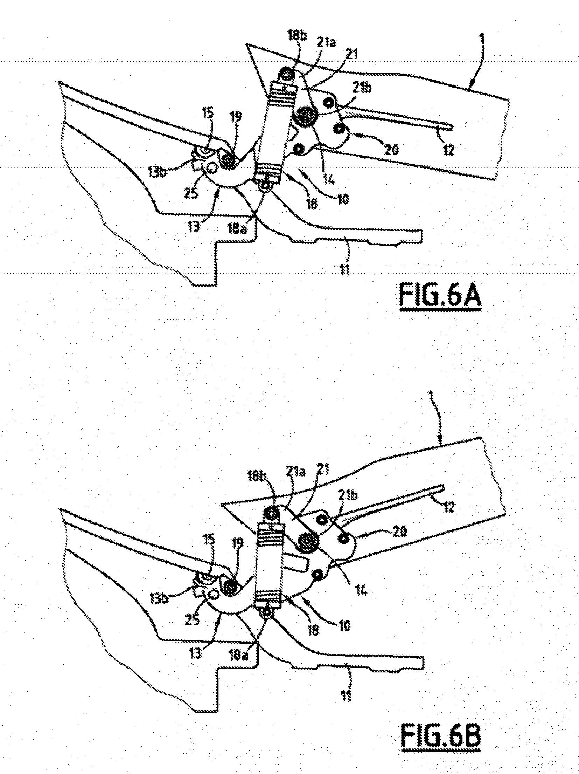

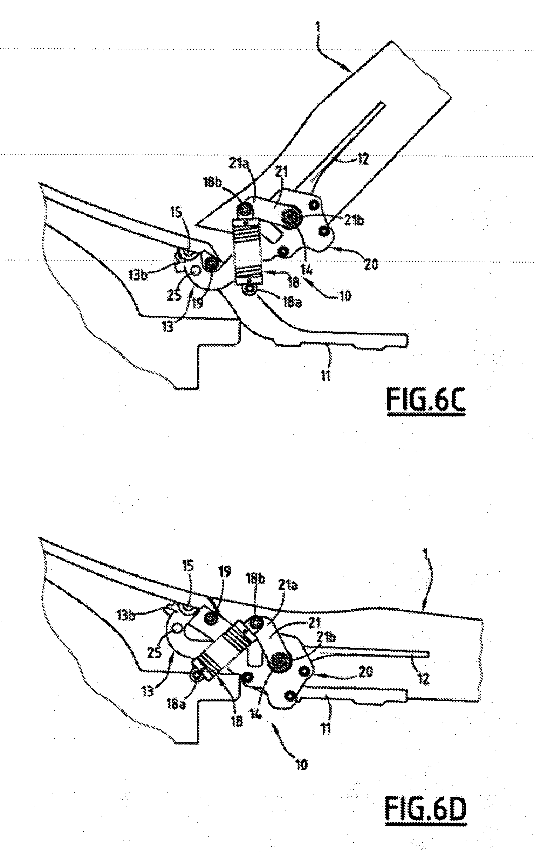

Le capot 1 étant dans la position représentée à la Fig. 6A, l'utilisateur ouvre ce capot 1 de manière classique. Le capot 1 tourne autour du second axe de rotation 15 jusqu'au contact entre le charnon mobile intermédiaire 13 et une butée 19 prévue sur le charnon fixe 11. L'utilisateur continu à lever la partie avant du capot 1 (Fig. 6B) qui tourne maintenant autour du premier axe de rotation 14 jusqu'au réenclechement des moyens 20 de verrouillage et de déverrouillage de ce premier axe de rotation 14. Un détrompeur visuel, non représenté, permet à l'utilisateur de savoir qu'il a suffisamment levé le capot 1, ainsi que montré à la Fig. 6C.

Ensuite, l'utilisateur rabaisse complètement le capot 1 de manière classique qui retrouve sa position initiale, comme représenté à la Fig. 6D. Pour permettre à l'utilisateur d'avoir accès au moteur disposé au-dessous du capot 1, il suffit de déverrouiller ce capot 1 qui s'ouvre de manière classique par rotation autour du second axe de rotation 15, le premier axe de rotation 14 étant dans sa configuration normale, c'est à dire bloqué par les moyens 20 de verrouillage.

La position relative entre la butée 19 et le charnon mobile intermédiaire 13 permet une ouverture du capot 1 équivalente à une charnière classique.

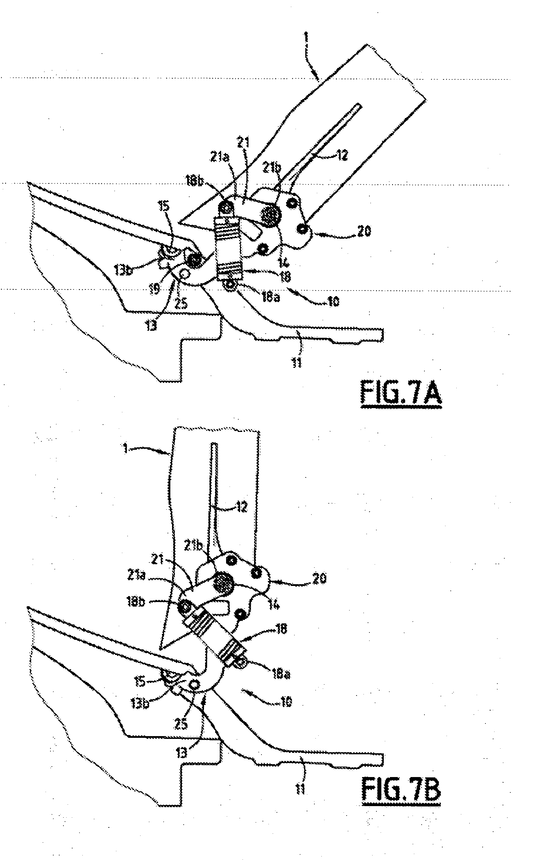

Pour permettre à un garagiste de pouvoir intervenir sur le moteur du véhicule automobile pendant un temps prolongé, le garagiste ouvre ce capot 1 pour l'amener dans une position correspondante à celle d'un utilisateur, comme montrée à la Fig. 7A, puis il dévisse la butée 19 qui n'empêche donc plus d'ouvrir le capot 1 complètement, c'est à dire à 90°. Lorsque le capot 1 est ouvert à 90°, un trou 25 ménagé dans le charnon mobile intermédiaire 13 se trouve en face du trou 26 laissé libre par la butée 19 dévissée. Pour maintenir le capot 1 dans sa position, le garagiste introduit une goupille 27 à travers les trous 25 et 26 ce qui permet de maintenir ce capot 1 en position d'ouverture maximale, ainsi que montrée à la Fig. 7B.

Le dispositif de protection des piétons selon l'invention permet, en cas de choc frontal, de remettre en état de fonctionnement les moyens de déplacement de la partie arrière du capot de façon aisée et tout en évitant l'immobilisation du véhicule et un surcoût de réparation pour rétablir la fonction active de ce capot.

## Revendications

1. Dispositif de protection des piétons en cas de choc frontal avec un véhicule automobile comprenant des moyens (10) de déplacement de la partie arrière du capot (1) entre une position de fermeture et une position surélevée et apte à être activés lors de la détection d'un choc piéton dans la partie frontale du véhicule, lesdits moyens (10) de déplacement étant conformés pour être réarmés manuellement suite à leur activation pour être de nouveau opérationnels, les moyens (10) de déplacement de la partie arrière du capot (1) comprennant au moins un ensemble formé par :
- un charnon fixe (11) solidaire de la caisse du véhicule,
- un charnon mobile (12) solidaire du capot (1), et **caractérisé en ce que** les moyens de déplacement comprennent en outre
- un charnon mobile intermédiaire (13) comportant, à l'une (13a) de ses extrémités, un premier axe d'articulation (14) sur le charnon mobile (12) et, à l'autre (13b) de ses extrémités, un second axe d'articulation (15) sur le charnon fixe (11), ledit second axe d'articulation (15) étant situé derrière le premier axe d'articulation (14) par rapport à l'avant du capot (1),
- des moyens (20) de verrouillage et de déverrouillage de la rotation du premier axe d'articulation (14) entre le charnon mobile (12) et le charnon mobile intermédiaire (13) dans les positions respectivement de fermeture et surélevée du capot (1), et
- un moyen (18) de transmission d'une poussée sur le charnon mobile (12) lors du déverrouillage du premier axe d'articulation (14) dans la position de fermeture du capot (1).

2. Dispositif selon la revendication 1, **caractérisé en ce que** le charnon mobile intermédiaire (13) a la forme d'un col de cygne dont la partie recourbée (13b) est dirigée vers le haut.

3. Dispositif selon la revendication 1 ou 2, **caractérisé en ce que** les moyens (20) de verrouillage et de déverrouillage de la rotation du premier axe d'articulation (14) comprennent un système à cames commandé par un effet électromagnétique, lui même déclenché par un moyen de traitement en fonction du signal transmis par un système de détection.

4. Dispositif selon l'une des revendications 1 à 3, **caractérisé en ce que** le moyen de transmission d'une poussée sur le charnon mobile (12) est formé par un ressort de compression (18) dont une première extrémité (18a) est fixée sur le charnon mobile intermédiaire (13) et dont une seconde extrémité (18b) est fixée sur le levier (21) relié au charnon mobile (12) par l'intermédiaire du premier axe d'articulation (14).

5. Dispositif selon l'une des revendications 1 à 4, **caractérisé en ce que** les moyens (20) de verrouillage et de déverrouillage, le ressort de compression (18) et le levier (21) forment un ensemble destiné à être monté sur le premier axe d'articulation (14).

6. Véhicule automobile, **caractérisé en ce qu'**il comprend un dispositif de protection des piétons selon l'une quelconque des revendications précédentes.

## Claims

1. Device for protecting pedestrians in the event of a head-on collision with a motor vehicle, comprising means (10) for moving the rear portion of the bonnet (1) between a closed position and a raised position and able to be activated when the collision of a pedestrian with the front portion of the vehicle is detected, said moving means (10) being designed such that they can be reset manually following their activation in order to be operational again, the means (10) for moving the rear portion of the bonnet (1) comprising at least an assembly consisting of:
- a fixed knuckle (11) secured to the vehicle body; and
- a moving knuckle (12) secured to the bonnet (1), and **characterized in that** the moving means also comprise
- an intermediate moving knuckle (13) having at one of its ends (13a) a first hinge pin (14) to the moving knuckle (12) and at the other of its ends (13b) a second hinge pin (15) to the fixed knuckle (11), said second hinge pin (15) being situated behind the first hinge pin (14) with respect to the front of the bonnet (1),
- means (20) for locking and unlocking the first hinge pin (14) in rotation between the moving knuckle (12) and the intermediate moving knuckle (13) in the respective closed and raised positions of the bonnet (1), and
- a means (18) for transmitting thrust to the moving knuckle (12) when the first hinge pin (14) is unlocked in the closed position of the bonnet (1).

2. Device according to Claim 1, **characterized in that** the intermediate moving knuckle (13) is in the form of a swan's neck of which the curved portion (13b) points upwards.

3. Device according to Claim 1 or 2, **characterized in that** the means (20) for locking and unlocking the first hinge pin (14) in rotation comprise a system of cams controlled by an electromagnetic effect itself triggered by a processing means depending on the signal transmitted by a detection system.

4. Device according to one of Claims 1 to 3, **characterized in that** the means for transmitting thrust to the moving knuckle (12) is formed by a compression spring (18), one end (18a) of which is fixed to the intermediate moving knuckle (13) and the other end (18b) of which is fixed to the lever (21) connected to the moving knuckle (12) by way of the first hinge pin (14).

5. Device according to one of Claims 1 to 4, **characterized in that** the locking and unlocking means (20), the compression spring (18) and the lever (21) form an assembly to be mounted on the first hinge pin (14).

6. Motor vehicle, **characterized in that** it comprises a device for protecting pedestrians according to any one of the preceding claims.

## Patentansprüche

1. Schutzvorrichtung für Fußgänger für den Fall eines Frontalzusammenstoßes mit einem Kraftfahrzeug, die Mittel (10) zum Verlagern des hinteren Teils der Motorhaube (1) zwischen einer geschlossenen Stellung und einer erhöhten Stellung enthält, die bei der Erfassung eines Zusammenstoßes mit einem Fußgänger im vorderen Teil des Fahrzeugs aktiviert werden können, wobei die Verlagerungsmittel (10) ausgelegt sind, um nach ihrer Aktivierung manuell zurückgestellt zu werden, damit sie erneut funktionsfähig sind, wobei die Mittel (10) zum Verlagern des hinteren Teils der Motorhaube (1) wenigstens eine Anordnung enthalten, die gebildet ist aus:
- einem festen Scharnierteil (11), das mit der Karosserie des Fahrzeugs fest verbunden ist; und -einem beweglichen Scharnierteil (12), das mit der Motorhaube (1) fest verbunden ist,
und **dadurch gekennzeichnet, dass** die Verlagerungsmittel außerdem enthalten:
- ein bewegliches Zwischenscharnierteil (13), das an einem (13a) seiner Enden eine erste Welle (14) für eine Drehung an dem beweglichen Scharnierteil (12) und am anderen (13b) seiner Enden eine zweite Welle (15) für eine Drehung an dem festen Scharnierteil (11) aufweist, wobei sich die zweite Drehwelle (15) in Bezug auf die Vorderseite der Motorhaube (1) hinter der ersten Drehwelle (14) befindet,
- Mittel (20) zum Verriegeln und Entriegeln der Drehung der ersten Drehwelle (14) zwischen dem beweglichen Scharnierteil (12) und dem beweglichen Zwischenscharnierteil (13) in der geschlossenen Stellung bzw. in der erhöhten Stellung der Motorhaube (1) und
- ein Mittel (18) zum Übertragen eines Schubs auf das bewegliche Scharnierteil (12) bei der Entriegelung der ersten Drehwelle (14) in der geschlossenen Stellung der Motorhaube (1).

2. Vorrichtung nach Anspruch 1, **dadurch gekennzeichnet, dass** das bewegliche Zwischenscharnierteil (13) die Form eines Schwanenhalses hat, dessen zurückgebogener Abschnitt (13b) nach oben gerichtet ist.

3. Vorrichtung nach Anspruch 1 oder 2, **dadurch gekennzeichnet, dass** die Mittel (20) zum Verriegeln und Entriegeln der Drehung der ersten Drehwelle (14) ein Nockensystem enthalten, das durch eine elektromagnetische Wirkung gesteuert wird, die ihrerseits durch ein Verarbeitungsmittel in Abhängigkeit von dem durch das Erfassungssystem übertragenen Signal ausgelöst wird.

4. Vorrichtung nach einem der Ansprüche 1 bis 3, **dadurch gekennzeichnet, dass** das Mittel zum Übertragen eines Schubs auf das bewegliche Scharnierteil (12) durch eine Druckfeder (18) gebildet ist, deren erstes Ende (18a) an dem beweglichen Zwischenscharnierteil (13) befestigt ist und deren zweites Ende (18b) an einem Hebel (21) befestigt ist, der mit dem beweglichen Scharnierteil (12) über die erste Drehwelle (14) verbunden ist.

5. Vorrichtung nach einem der Ansprüche 1 bis 4, **dadurch gekennzeichnet, dass** die Verriegelungs- und Entriegelungsmittel (20), die Druckfeder (18) und der Hebel (21) eine Gesamtheit bilden, die dazu bestimmt ist, an der ersten Drehwelle (14) angebracht zu werden.

6. Kraftfahrzeug, **dadurch gekennzeichnet, dass** es eine Fußgängerschutzvorrichtung nach einem der vorhergehenden Ansprüche enthält.
